# EUROPÄISCHE PATENTSCHRIFT

(11) **EP 3 014 971 B1**
(45) Veröffentlichungstag und Bekanntmachung des Hinweises auf die Patenterteilung: **12.12.2018**
(21) Anmeldenummer: 15002960.1
(22) Anmeldetag: 16.10.2015
(51) Int. Cl.: A01D 33/00, A01D 67/00, A01D 17/10

(54) **MASCHINE ZUM ERNTEN VON HACKFRÜCHTEN**
MACHINE FOR HARVESTING ROOT CROPS
MACHINE DE RECOLTE DE PLANTES SARCLEES

(30) Priorität: 28.10.2014 DE 102014015834
(43) Veröffentlichungstag der Anmeldung: 04.05.2016
(73) Patentinhaber: Grimme Landmaschinenfabrik GmbH & Co. KG, 49401 Damme (DE)
(72) Erfinder: Dettmer, Franz-Josef, D-49577 Ankum (DE); Feldkämper, Stefan, D-59387 Ascheberg (DE)
(74) Vertreter: Wischmeyer, André

(56) Entgegenhaltungen:
- EP-A1- 1 405 554
- DE-A1- 3 631 969
- DE-U1- 29 613 018
- DE-U1- 29 619 474
- GB-A- 574 777

## Beschreibung

Die Erfindung betrifft eine Maschine zum Ernten von Hackfrüchten, insbesondere in Form einer Kartoffelvollerntemaschine gemäß dem Oberbegriff des Anspruchs 1.

Maschinen zum Ernten von Hackfrüchten, insbesondere Kartoffeln, sind in unterschiedlichen Ausführungen von gezogenen Aggregaten oder selbstfahrenden Maschinen seit langem bekannt. Bei diesen Maschinenkonzepten werden jeweils mehrere Reihen des Erntegutes mit Beimengungen vom Ackerboden aufnehmende Rodeeinrichtungen im Zusammenhang mit einem nachfolgenden Förder- und Reinigungssystem genutzt. In DE 32 35 087 C2 (/; 1) ist eine derartige Konstruktion mit einer von einem Traktor gezogenen Hackfruchterntemaschine dargestellt.

Gemäß GB 574 777 A wird eine gezogene Maschine vorgeschlagen, bei der das Erntegut über einen ersten Förderer zu einem obenliegenden zweiten Siebsystem bewegt wird. Diese beiden in jeweiligen starren Rahmen gehaltenen Systeme sind durch einen oberen Abstandsspalt getrennt, in dessen Bereich Verluste von Erntegut durch Herabfallen denkbar sind. Deshalb müssen die beiden über Kegelräder und Wellen angetriebenen Systeme in der Arbeitsphase linear hintereinander ausgerichtet bleiben.

Auch bei einer Kartoffelvollerntemaschine gemäß DE 93 20 575.9 U1 (/; 2) ist ausgehend von einer mit Rodescharen versehenen Aufnahmevorrichtung ein nachfolgendes Siebförderband vorgesehen, mit dem das Erntegut und die Beimengungen einer nächsten Reinigungsstufe zugeführt werden.

Eine Kartoffelerntemaschine gemäß DE 296 13 018 U1 weist zwei in Förderrichtung aneinander anschließende Rahmenteile auf, wobei im ersten eine Dammaufnahmeeinrichtung vorgesehen ist und der zweite ein Siebband abstützt. Damit soll die Dammaufnahmeeinrichtung optimal auf die jeweiligen Reihen des Ackerbodens eingestellt werden. Bei der Maschine gemäß DE 36 31 969 A1 ist eine kurzbauende Konstruktion vorgesehen, mit der eine Ablage von geernteten Kartoffeln im Schwad möglich ist.

Die Rübenvollerntemaschine gemäß DE 296 19 474 U1 ist auf eine verbesserte Radsteuerung gerichtet, mit der ein spurversetzter Betrieb der Vorder- und Hinterräder erreicht wird. Dies geschieht ohne Bezug zu nachgeordneten Baugruppen der Hackfruchternte.

Eine komplexere Ausführung einer gezogenen Kartoffelerntemaschine gemäß DE 10 2007 034 446 A1 (/; 3) weist ebenfalls nachgeordnet einer Rodeeinrichtung einen ersten Längsförderer auf, der im Verbund mit einer in der gleichen Rahmenkonstruktion gehaltenen zweiten Siebbandstufe wirksam ist. Dabei ist - ausgehend von einer eine Bandüberdeckung aufweisenden Übergabezone - eine Hochförderung des Gemisches vorgesehen. Dabei sind sämtliche der Förder- und Reinigungsbaugruppen an einer weitgehend geschlossenen Rahmenkonstruktion der Maschine gehalten, so dass eine lineare Verlagerung zu einem oberen Umlenk- und Sortierbereich hin erfolgt.

Eine ähnliche Konstruktion ist bei einer selbstfahrenden Kartoffelvollerntemaschine vorgesehen (Prospekt "SF 150/170-60" der Firma Grimme Landmaschinenfabrik GmbH & Co. KG, Damme, Veröffentlichungsnummer: L05.0851.DE04/08/2000; 2008) (/;4), wobei eine das Erntegut aufnehmende erste Reinigungseinheit mit Aufnahmeband sowie einem ersten Siebband und eine zweite Reinigungseinheit mit einem zweiten Siebband in einer linearen Abfolge als Förderbaugruppen hintereinander angeordnet sind. Auch bei einer Maschine gemäß EP 1 405 554 A1 ist eine lineare Trennstrecke mit mehreren Siebbändern vorgesehen.

Ein ähnliches System ist bereits in DE 36 31 969 A1 (/;5) gezeigt, wobei hier dem zweiten Band jeweilige Querförderbänder zugeordnet sind. Aus DE 296 13 018 U1 (/;6) ist eine Kartoffelerntemaschine bekannt, bei der die Dammaufnahmeeinrichtung und die nachfolgenden Siebketten getrennt voneinander an der Aushubschwinge und dem Maschinenhauptrahmen angeordnet sind.

Bei der technischen Weiterentwicklung derartiger Erntemaschinen für Hackfrüchte werden zur Verbesserung der Reinigungs- und Sortierbedingungen jeweilige, dem vorderen Aufnahme- und Reinigungssystem nachgeordnete Komponenten des Förderkomplexes oder jeweilige, zur manuellen Sortierung vorgesehene Bandbaugruppen - beispielsweise im Bereich von Übergabeförderbändern - durch größere Baugruppen ersetzt, die in Bezug auf den Maschinenrahmen einen seitlichen Überstand verursachen können. Damit ist gleichzeitig die Handhabbarkeit des entlang der Feldkontur zu steuernden Systems beeinflusst, da die Durchführung eines kompletten Rodevorgangs insbesondere im Nahbereich jeweiliger Randzonen des Feldes durch überragende Bauteile der Maschine beeinflusst sein kann und damit Ernteverlusten eintreten können. Bei dem bisherigen Konzept (gemäß /; 4) der selbstfahrenden Kartoffelvollerntemaschinen ist die Lenk- und Antriebseinheit vorlaufend dem Aufnahmesystem für das Erntegut angeordnet, so dass eine entsprechende Länge der Maschine beachtlich ist.

Die Erfindung befasst sich mit dem Problem, eine Maschine zum Ernten von Hackfrüchten, insbesondere in Form einer Kartoffelvollerntemaschine zu schaffen, die mit geringem technischem Aufwand als kompakte Einheit einsetzbar ist, damit auch in einem beengten Bewegungsraum entlang eines Randbereiches der Erntefläche ein optimaler Rodevorgang möglich ist und damit Ernteverluste bei verbesserten Fahrbewegungen an Nutzflächenrändern vermeidbar sind.

Die Erfindung löst diese Aufgabe mit einer Maschine mit den Merkmalen des Anspruchs 1. Wesentliche weitere Ausgestaltungen ergeben sich aus den Ansprüchen 2 bis 27.

Ausgehend von bekannten Konzepten der Erntetechnik für Hackfrüchte, insbesondere Konstruktionen in Form von Kartoffelvollerntemaschinen, die das im Bereich einer Rodeeinrichtung mit Beimengungen vom Ackerboden abgenommene Erntegut über Fördersysteme zu einem Sammelpunkt hin verlagern, zeichnet sich die erfindungsgemäße Maschinen-Struktur dadurch aus, dass die im Bereich der Erntegutaufnahme vorgesehenen Baugruppen konzeptionell an eine mehr als zwei Reihen des Erntegutes aufnehmende Kompaktmaschine angepasst werden.

Der erfindungsgemäße Selbstfahr-Kartoffelroder ist im Bereich seines in Förderrichtung des aufgenommenen Erntegutes ersten Längsförderers mit der vorgeordneten Rodeeinrichtung zu einer funktionalen Baueinheit verbunden, die in Querrichtung der Maschine relativ zum zweiten nachgeordneten Siebbandförderer verlagerbar ausgeführt ist. Damit wird in der Übergabezone zwischen Längsförderer und nachgeordnetem Siebbandförderer eine variabel nutzbare "Teilungsebene" des Gesamtfördersystems erreicht, wobei die neuartig kombinierten Sieb- und Reinigungsstrecken - auch in der seitlichen Abstandslage der "verschieblichen" Baugruppen - einen optimalen Förderstrom gewährleisten.

Zwischen dem Längsförderer und dem Siebbandförderer besteht in Längsrichtung üblicherweise - Stand der Technik (/;4) - eine eine Bandüberdeckung aufweisende Übergabezone, so dass der Erntegutstrom "in Linie" verlagert werden kann. In diesem Bereich sieht die erfindungsgemäß verbesserte Konstruktion die vordere, funktional veränderte Baueinheit vor, die ausgehend von der gemeinsamen Übergabezone zumindest bereichsweise in einen seitlichen Abstand zum zweiten Siebbandförderer verlagert werden kann. Damit kann eine "beabstandete" Arbeitsposition der Rodeeinrichtung in Bezug auf die nachgeordneten Aggregate erreicht werden.

Dieses Konzept führt dazu, dass im Bereich jeweiliger, an die Übergabezone anschließender und zur Fahr- und Erntegutbewegung vorgesehener Aggregate am Maschinenrahmen an sich bekannte funktionsbedingte Baugruppen-Konturen nunmehr so ausführbar sind, dass ausgehend von einer zulässigen Maschinenbreite - die insbesondere mit Blick auf die verfügbare Fahrbreite bei Straßenfahrt der Maschine zu bemessen ist - ein kompaktes erweiterbares Maschinenkonzept möglich wird. Dieses ist in Gebrauchslage auf dem Erntefeld mit zumindest einseitigem seitlichem Überstand einsetzbar, da die vordere verlagerbare Baueinheit auch das Roden im Randbereich der Ackerfläche ermöglicht. Diese überstehenden Baugruppen können nach Abschluss eines Erntezyklus und einer trotz "Überstandslage" ungestörten Benutzung wieder verlagert und in die zulässige Zone der "Fahrbreite" zurückbewegt werden.

Der Einsatz dieser die Verlagerungsmöglichkeiten der vorderen Baueinheit in den seitlichen Abstand nutzenden Maschine führt in Gebrauchslage zu dem Vorteil, dass die vorgelagerte Baueinheit - zumindest im Bereich ihrer Rodeeinrichtung - als "autarke" Struktur in jeweiligen variabel einstellbaren Aufnahmebereichen am Ackerboden positioniert werden kann. Außerdem bleibt die Ernteleistung unbeeinflusst, da die vordere Baueinheit und der nachgeordnete Siebbandförderer - ausgehend von der vorbeschriebenen Rodebreite - insgesamt eine Reinigungsstrecke definieren, die eine im Wesentlichen unveränderte Transportbreite aufweist und diese auch in den verschiedenen Fahrsituationen beim Ernten nutzbar bleibt.

Insbesondere wird mit dem erfindungsgemäßen Konzept erreicht, dass durch den als seitlichen Versatz wirkenden Abstand von vorderer Baueinheit und zweitem Siebbandförderer die Maschine in jeweiligen Gebrauchslagen am Rand des Erntefeldes verbessert einsetzbar ist. Ein bis nahe diesem Randbereich verlaufender Ackerbodenstreifen kann nunmehr einfacher erfasst und die Ackerfläche vollständig abgeerntet werden. Auch in einem denkbaren Anwendungsfall, bei dem am Randbereich über diesen auf die Nutzfläche hineinragende Hindernisse auftreten, ist die Maschine besser einsetzbar, da deren seitlich überstehende Baugruppen - durch die variierbare Herstellung des jeweiligen seitlichen Abstandes - an Hindernissen berührungslos entlanggeführt werden und damit mit geringem Stellaufwand Beschädigungen der Maschine zuverlässig vermeidbar sind.

Es ist vorgesehen, dass die vordere Baueinheit durch eine Schwenkverlagerung relativ zum nachgeordneten Siebbandförderer den seitlichen Abstand bildet. Durch diese vergleichsweise einfach zu steuernde Schwenk-Verstellung wird eine spitzwinklig zur Maschinenlängsmittelebene geneigte Gebrauchslage der Rodeeinrichtung im Bereich der vorderen Baueinheit definiert. Die jeweilige Winkellage ist dabei gestuft oder stufenlos erreichbar.

Mit dieser Schwenkverlagerung ist eine entsprechende Beeinflussung der Förderstruktur verbunden. Dabei wird im Bereich der Übergabezone ein zwischen dem Siebband-Rahmen der vorderen Baueinheit und dem Hauptrahmen der Maschine eingeleiteter Verlagerungsausgleich geschaffen. In dieser "Kompensations-Zone" mit veränderten Förderbedingungen entsteht mit der Einstellung des seitlichen Abstandes eine gegenüber "Normallage" veränderte Bandüberdeckung. Diese weist nunmehr in Folge der "einfachen" Schwenkverlagerung der vorderen Baueinheit eine in Draufsicht spitzwinklig verlaufende Kontur auf. Dabei sind diese Komponenten des Schwenksystems so aufeinander abgestimmt, dass die Bildung einer nach unten offenen Fallzone vermieden wird und auch ein seitlicher Austritt von Erntegut vermieden wird.

Die konstruktive Umsetzung jeder der unterschiedlichen Varianten zur erfindungsgemäßen Abstands-Verstellung geht davon aus, dass mittels zumindest einer in das Maschinenkonzept im Bereich der Übergabezone zu integrierenden Stellvorrichtung die den seitlichen Abstand bewirkende Relativbewegung zwischen vorderer Baueinheit und zweitem Siebbandförderer einzuleiten ist.

Es hat sich gezeigt, dass an sich bekannte Verbindungsbaugruppen im Bereich des Fördersystems einer Kartoffelvollerntemaschine nutzbar sind. In dieses System ist zur Anpassung der neuen Maschinenstruktur an unterschiedliche Schwenkpositionen eine einfach bauende Stellvorrichtung zu integrieren. Diese ist so konzipiert, dass die Maschine mittels der die Schwenkverlagerung bewirkenden Stellvorrichtung in eine als Hundegang-Fahrstellung definierte Positionen gebracht werden kann und in dieser Gebrauchslage die Maschine insbesondere an Feldrändern effektiv nutzbar ist. Dabei ist vorgesehen, dass an den überstehende Baugruppen aufweisenden Längsseiten der Maschine variable "freie" Wirkbereiche - vorzugsweise durch entsprechende Winkelverstellungen - definierbar sind. Dazu kann die Stellvorrichtung die verlagerbaren Komponenten des Aufnahme- und Förderbereichs in einem frei vorgebbaren Stellbereich positionieren. In dieser "Schwenkposition" werden gleichzeitig die Stützräder der Maschine so gelenkt, dass während des Rodevorgangs der Ackerboden nur einmal überrollt wird und damit eine verringerte Pressung und Verdichtung erfolgt.

Diese Verstellmöglichkeit im Bereich der Übergabezone können außerdem darauf gerichtet sein, dass zwischen dem in Förderrichtung hinteren Ende der vorderen Baueinheit und dem Aufnahmebereich des zweiten Siebbandförderers eine den Förderstrom des Erntegutes beeinflussende Fallhöhe als einstellbares Funktionsmaß nutzbar wird. Damit ist in die Reinigungsstrecke des Gemisches aus Erntegut und Beimengungen mit variierbaren Fallhöhen eine Beschleunigungsphase integriert, so dass eine zusätzliche Steuerung des Reinigungs- und Sortiervorgangs denkbar ist. In vorteilhafter konstruktiver Gestaltung ist dabei im Bereich der Stellvorrichtung die Anwendung von Stellspindeln vorgesehen.

Das Konzept der zumindest einen im Bereich der Übergabezone vorgesehenen Stellvorrichtung ist auch darauf gerichtet, dass mittels zumindest eines Stellorgans die Fallhöhe und/oder die Bandüberdeckung bereichsweise oder über die gesamte Quererstreckung der Übergabezone verändert werden kann. Ausgehend davon, dass eine Bedienperson der Kartoffelvollerntemaschine den die Übergabezone passierenden Förderstrom beobachten oder detektieren kann, sind durch entsprechende Stellbewegungen an den Förderkomponenten auch im Bereich der Übergabezone variable Trenn- und Siebbedingungen erreichbar.

Für die als relative Schwenkverlagerung vorgesehene Abstandsverstellung im Bereich der Übergabezone ist der Siebbandförderer mit einer angepassten Rahmenkonstruktion ausgeführt. Der Siebbandförderer wird ausgehend von seinem zur vorderen Übergabezone gerichteten Aufnahmebereich mit einem seitliche Rahmenstreben aufweisenden Hauptrahmen versehen, der sich bis an ein oberes Abgabeende erstrecken kann.

Es ist davon auszugehen, dass es verschiedene konstruktive Möglichkeiten gibt, die relative Schwenkverlagerung zwischen vorderer aufnehmender Baueinheit und Siebbandförderer zu erreichen. Unter dieser Voraussetzung ist eine bevorzugte Gestaltung der Hauptrahmen vorgesehen. Die Fixierung des Hauptrahmens im Bereich des als Basisbaugruppe des Systems vorgesehenen Maschinenrahmens ist dabei darauf gerichtet, dass eine zumindest bereichsweise torsionsweiche Abstützung für zumindest Teilbereiche des Siebbandförderers erreicht wird. Durch diese Gestaltung von Bauteilen in Form einer torsionsweichen Abstützung entsteht der Vorteil, dass unter Nutzung weitgehend unveränderter Verbindungsbauteile - und entsprechender Stellkräfte im Bereich der steuerbaren Stellvorrichtung - jeweilige berechenbare "Verwindungen" in das "weiche" Rahmensystem einleitbar sind.

Es ist denkbar, die zur elastischen Verlagerung nutzbaren Rahmenteile so zu bemessen, dass mit deren "Schwenkmaß" der seitliche Abstand in Form der Winkel-Verschwenkung definiert werden kann. Bei einer nachfolgenden, die Stellkräfte aufhebenden "Stromlosstellung" des Stellgliedes im Bereich der Stellvorrichtung kann im Bereich der Rahmenteile eine weitgehend "automatische" Rückverlagerung erfolgen, so dass die relativ zueinander verlagerten und eine definierte Verwindung aufweisenden Bauteile in die "Normallage" gelangen. Danach ist die gesamte Maschine so ausgerichtet, dass mit Geradeausfahrt - ohne "Hundegang" - der weitere Rodevorgang erfolgt.

Die Konstruktion des den Siebbandförderer aufnehmenden Hauptrahmens - als wesentliche Baugruppe des erfindungsgemäßen "Verwindungskonzeptes" - sieht vor, dass dieser an seinem zur Übergabezone gerichteten Ende mit Rahmenansätzen versehen ist, die die vorbeschriebene torsionsweiche Abstützung mit geringem Aufwand ermöglichen. Insbesondere ist vorgesehen, dass der den Siebbandförderer aufnehmende Hauptrahmen durch eine diesem einen torsionsweichen vorderen Teilabschnitt und einen torsionssteifen hinteren Teilabschnitt vorgebende Stützbrücke mit dem Maschinenrahmen verbunden wird.

Durch entsprechende Auswahl und Bemessung der hier vorgesehenen Bauteile kann die Relation von torsionsweichen und torsionssteifen Baugruppen an die jeweilige erweiterte Maschinenkonstruktion - insbesondere mit Blick auf eine mehr als dreireihige Rodebreite - angepasst werden.

Für die erfindungsgemäße Herstellung des seitlichen Abstandes - insbesondere durch die vorbeschriebene relative Schwenkverlagerung mit "Verwindung" - ist die Rahmen- und Gestellkonstruktion im Bereich der Maschinenlängsmittelebene mit einem weitgehend zentral angeordneten Gelenklager versehen. Dabei sieht die Konstruktion vor, dass ein zumindest den ersten Längsförderer der vorgeordneten Baueinheit erfassender Tragrahmen über die im Bereich der Maschinenlängsmittelebene zentral angeordnete Konstruktion des Gelenklagers erfasst und damit dieser Tragrahmen um eine im Wesentlichen vertikale Hochachse schwenkbar abgestützt ist.

Mit dieser Konstruktion wird erreicht, dass der zwischen zwei Seitenschenkeln des Tragrahmens aufgenommene Längsförderer durch jeweilige seitliche Schwenkverlagerungen in den geneigten Gebrauchslagen bzw. mit dem entsprechenden seitlichen Überstand positioniert werden kann. Das System ist dabei so ausgeführt, dass sämtliche weitere Baugruppen - insbesondere die torsionsweichen bzw. torsionssteifen Teilabschnitte des in Wirkverbindung befindlichen Siebbandförderers - in ihrer Verbindungsposition verbleiben können. Damit ist bei der Verwindungskonstruktion im Bereich der Übergabezone ein Konzept verwirklicht, bei dem ein denkbares Lösen und nachfolgendes Einrasten von Verbindungsbaugruppen vollständig entbehrlich ist.

Es hat sich gezeigt, dass eine optimale Bauteilabstützung dann erreicht wird, wenn das Gelenklager mit dem Maschinenrahmen im Bereich eines Querbalkens verbunden wird. Damit wird erreicht, dass die Stellvorrichtung ausgehend vom Gelenklager jeweilige, zu den beiden Seitenschenkeln des vorderen Tragrahmens gerichtete Tragstreben aufweisen kann und damit eine Abstützung nach Art eines mit dem Stellorgan zusammenwirkenden Pendelrahmens gebildet wird. Eine zweckmäßige Gestaltung der Stellvorrichtung sieht in diesem Bereich vor, dass zwischen den Seitenschenkeln des Tragrahmens sowie dem Hauptrahmen der Maschine des nachgeordneten Siebbandförderers das zumindest eine Stellorgan vorgesehen ist. In zweckmäßiger Ausführung ist das Stellorgan in Form eines Hydraulikzylinders ausgebildet.

In Bezug auf die zur Maschinenlängsmittelebene gegenüberliegenden Abstützungsbereiche an den beiden Randseiten der Übergabezone bzw. der sich hier überdeckenden Förderbandstrukturen ist vorgesehen, dass im Wesentlichen spiegelbildlich aufgebaute Verbindungsteile als Gesamtheit mit dem Gelenklager die eine Stellvorrichtung bilden. In einer vorteilhaft ausgeführten Variante dieser kompakten Stellvorrichtung ist vorgesehen, dass auch nur ein Hydraulikzylinder als "einseitiges" Stellorgan in das System der beidseitigen Verbindungsteile integrierbar ist und damit der Aufwand an hydraulischen Komponenten reduziert wird. Auch mit dieser einseitigen Antriebssteuerung kann die vorbeschriebene Herstellung der jeweiligen Abstandslage variabel beeinflusst werden.

Dabei ist der Hydraulikzylinder einerseits an einer der Rahmenstreben des Siebbandförderers gelagert. Andererseits erfasst der Hydraulikzylinder eine vordere Tragstrebe des Längsförderers und ist mit einer dem Pendelrahmen zugeordneten Führungsstrebe verbunden. Es versteht sich, dass in diesen seitlichen Randbereichen der Übergabezone mit den verlagerbaren Teilen der Stellvorrichtung auch weitere Stützelemente der beiden hier die Bandüberdeckung bildenden Förderer zu fixieren sind. Daraus resultiert, dass in diesem Randbereich - zusätzlich zu dem Stellorgan in Form des Hydraulikzylinders - entsprechende Halteplatten und Koppelstangen o. dgl. Stützbauteile zu platzieren sind.

Ausgehend von dem eine mehr als zweireihige Rodebreite aufweisenden Konzept der einstellbaren Kartoffelvollerntemaschine ist vorgesehen, dass diese im Bereich oberhalb der Übergabezone mit einem im Bereich des Maschinenrahmens abgestützten Führerhaus versehen wird. Damit wird eine optimale Einbauposition vorgegeben, wobei das Führerhaus unabhängig von den Baugruppen des Maschinenrahmens und der darin gehaltenen Förderbaugruppen verlagerbar sein kann. Eine Optimierung dieser Einbaulage des Führerhauses sieht vor, dass dieses im Bereich des den ersten Längsförderer abstützenden Tragrahmens gehalten ist. Ausgehend von der erfindungsgemäßen relativen Schwenkverlagerung von Baugruppen in die seitliche Abstandslage ist vorgesehen, dass das Führerhaus vorteilhaft gemeinsam mit dem Tragrahmen bewegt werden kann und damit eine optimale Übersichtsposition gewährleistet ist.

Weitere Einzelheiten und vorteilhafte Ausgestaltungen der erfindungsgemäßen Kartoffelvollerntemaschine ergeben sich aus der nachfolgenden Beschreibung und den Zeichnungen, die mehrere Ausführungsbeispiele zeigen. In der Zeichnung zeigen:
- Fig. 1: eine Prinzipdarstellung der erfindungsgemäßen Kartoffelvollerntemaschine in Seitenansicht mit schematischer Darstellung von Förderaggregaten,
- Fig. 2: eine Draufsicht der Kartoffelvollerntemaschine beim Einsatz im Randbereich einer Erntefläche,
- Fig. 3: eine Draufsicht ähnlich Fig. 2 mit Verlagerung von Maschinenbaugruppen in eine seitliche Abstandslage zum Randbereich des Erntefeldes,
- Fig. 4: eine Perspektivdarstellung der zur Herstellung der seitlichen Abstandslage gemäß Fig. 3 vorgesehenen Rahmenteile der Kartoffelvollerntemaschine,
- Fig. 5: eine Draufsicht der Rahmenteile gemäß Fig. 4 bei Geradeausfahrt,
- Fig. 6: eine Draufsicht der Rahmenteile in seitlicher Abstandslage,
- Fig. 7: eine Seitenansicht des Maschinengestells im vorderen Bereich,
- Fig. 8: eine vergrößerte Ausschnittsdarstellung einer Übergangszone VIII im Bereich der Förderstrecke gemäß Fig. 7,
- Fig. 9 und Fig. 10: jeweilige Perspektivdarstellungen der Übergabezone gemäß Fig. 8 in unterschiedlichen Schwenkphasen,
- Fig. 11 und Fig. 12: vergrößerte Einzeldarstellungen von torsionsweichen Rahmenteilen in unterschiedlichen Stellungen,
- Fig. 13 und Fig. 14: jeweilige Prinzipdarstellungen ähnlich Fig. 5 mit der Schwenkverlagerung im Bereich des Gelenklagers, und
- Fig. 15: eine vergrößerte Perspektivdarstellung der Rahmenkonstruktion mit Stützzonen im Bereich der vorderen Baueinheit.

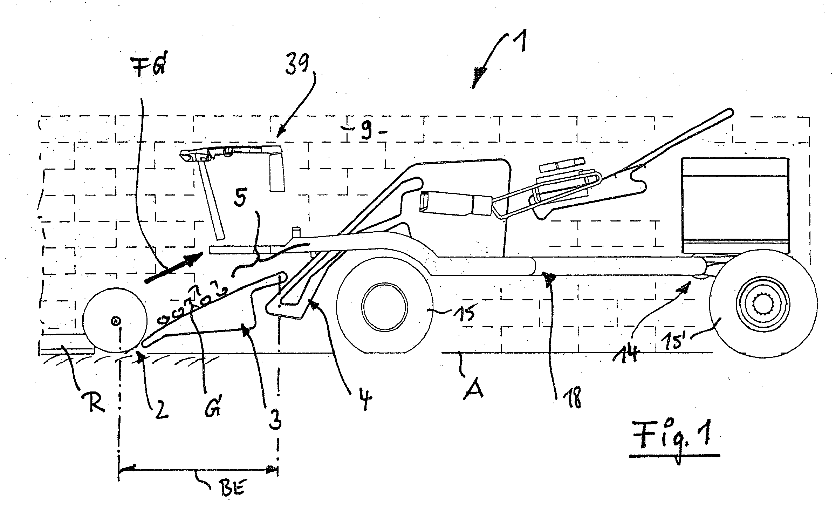

In den Darstellungen gemäß Fig. 1 bis Fig. 3 ist in jeweiligen Prinzipdarstellungen eine Maschine zum Ernten von Hackfrüchten, insbesondere in Form einer Kartoffelvollerntemaschine 1, gezeigt. Aus der Seitenansicht gemäß Fig. 1 wird deutlich, dass die Konstruktion bei Anwendung an sich bekannter Baugruppen eine in der Gebrauchslage befindliche Rodeeinrichtung 2 aufweist. Auf einem Erntefeld E werden dabei quer zur Fahrtrichtung F entsprechend einer Rodebreite B mehrere Reihen R des Erntegutes mit Beimengungen vom Ackerboden A aufgenommen.

Bei einer aus (/;4) bekannten selbstfahrenden Kartoffelvollerntemaschine werden zwei Reihen R mittels der Rodeeinrichtung 2 aufgenommen und von dieser aus das aufgelockerte Gemisch G aus Erntegut und Beimengungen mittels eines ersten Längsförderers 3 entgegen der Fahrtrichtung F in Förderrichtung FG verlagert. Im Verlauf dieser Förderphase erfolgt eine Überleitung auf einen zweiten Siebbandförderer 4, wobei zwischen Längsförderer 3 und Siebbandförderer 4 eine eine Bandüberdeckung aufweisende Übergabezone 5 definiert ist.

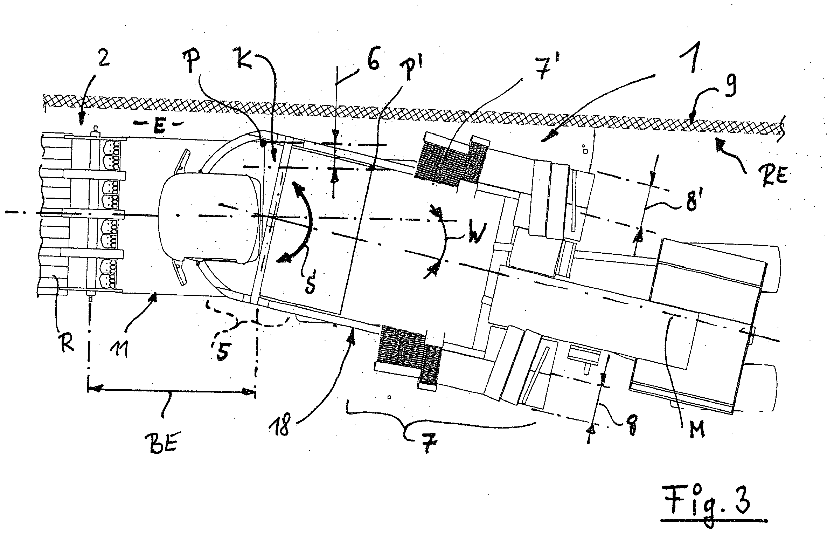

Das erfindungsgemäße Konzept der Kartoffelvollerntemaschine 1 geht nunmehr davon aus, dass der in Förderrichtung FG erste Längsförderer 3 mit der vorgeordneten Rodeeinrichtung 2 eine - in Querrichtung Q der Maschine 1 - relativ zum zweiten Siebbandförderer 4 verlagerbare Baueinheit BE bildet. Damit wird in dieses mehrgliedrige System der Förder- und Reinigungsstrecke eine "autarke" Baueinheit BE integriert, mit der ausgehend von der gemeinsamen Übergabezone 5 ein allgemein mit 6 bezeichneter seitlicher Abstand (Fig. 3) zwischen den Baugruppen der Erntegutaufnahme gebildet werden kann (Vergleichspunkte zwischen Längsförderer 3 und Siebbandförderer 4: P, P').

Diese mit konstruktiv unterschiedlichen Mitteln lösbare Abstands-Verlagerung Q der Baueinheit BE ist darauf gerichtet, dass die Maschine 1 im Bereich jeweiliger, an die Übergabezone 5 anschließender und zur Fahr- und Erntegutbewegung vorgesehener Aggregate 7 (Fig. 3) einen zumindest einseitigen seitlichen Überstand 8, 8' aufweisen kann. Damit kann die Maschine 1 ausgehend von der Maschinenbreite bzw. der vorderen Rodebreite B mit groß bauenden und seitlich die maximale Fahrbreite derartige Systeme überragenden Teilen bestückt werden (Überstand 8, 8').

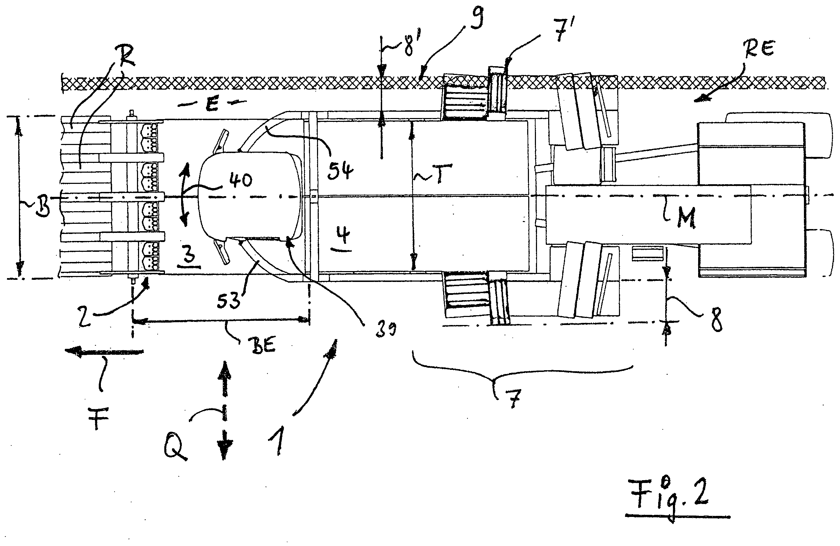

Aus der Prinzipdarstellung gemäß Fig. 3 wird in Zusammenschau mit Fig. 2 das erfindungsgemäße Konzept deutlich, wobei durch den als seitlichen Versatz einstellbaren Abstand 6 von vorderer Baueinheit BE und zweitem Siebbandförderer 4 der Einsatz der Maschine 1 auch an einem Rand RE des Erntefeldes E durchführbar ist. Durch Herstellung des seitlichen Abstandes 6 wird erreicht, dass einem in Fig. 2 ersichtlichen Hindernis 9 - beispielsweise in Form einer Hecke, eines Zaunes oder einer Wand - im Bereich der Rodeeinrichtung 2 nunmehr eine Ausweichbewegung nicht mehr notwendig wird und damit nachteilige Folgen in Form von Ernteverlusten vermieden sind. Vielmehr kann durch Herstellung des seitlichen Abstandes 6 auch der am Rand des Erntefeldes E verlaufende Ackerbodenstreifen vollständig erfasst werden. Die in diesen Bereich hineinragenden Hindernisse 9 können von den mitsamt dem Maschinenrahmen "verlagerten" Bauteilen 7' nach Einstellung der Hundegang-Fahrstellung beschädigungsfrei passiert werden (Fig. 3).

Es versteht sich, dass die vorgelagerte Baueinheit BE zumindest im Bereich ihrer Rodeeinrichtung 2 in jeweiligen variabel einstellbaren Aufnahmebereichen am Ackerboden A bzw. im Abstand 6 zum Hindernis 9 positioniert werden kann. Die konstruktive Ausgestaltung des Systems mit der autarken Baueinheit BE bzw. der relativen Verlagerungsmöglichkeit zwischen dieser und dem Siebbandförderer 4 ermöglicht Ausführungen, bei denen jeweilige variierbare Breiten B und/oder variierende Anzahlen von Reihen R des Erntegutes auf dem jeweiligen Ackerbodenstreifen erfassbar sind.

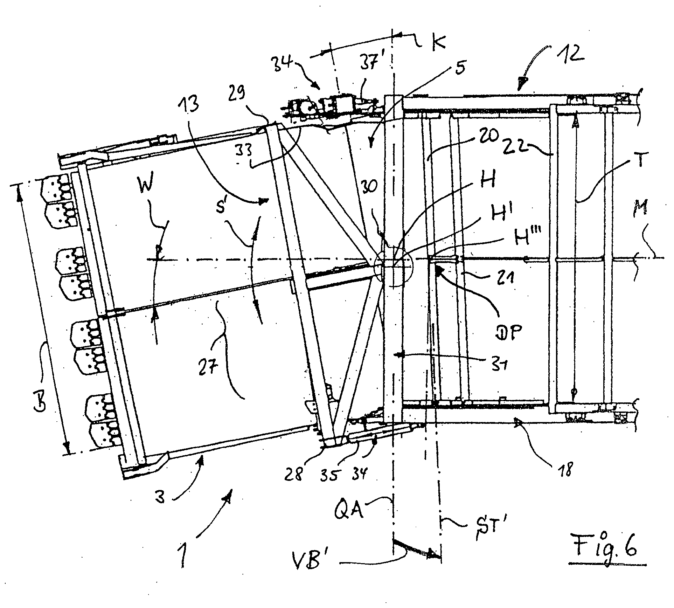

Eine vorteilhafte Ausführung der erfindungsgemäß optimierten Konstruktion sieht vor, dass die vordere Baueinheit BE durch eine Schwenkverlagerung S relativ zum nachgeordneten Siebbandförderer 4 hin den seitlichen Abstand 6 in Form eines Winkels W bilden kann (Fig. 3, Fig. 6). Damit ist eine Einstellung des Systems derart möglich, dass eine spitzwinklig - gemäß dem Winkel W - zur Maschinenlängsmittelebene M geneigte Gebrauchslage der vorderen Baueinheit BE eingestellt werden kann. Dabei bleiben die Förderbedingungen für das Gemisch G über die gesamte Bearbeitungsbreite B bzw. T gewährleistet.

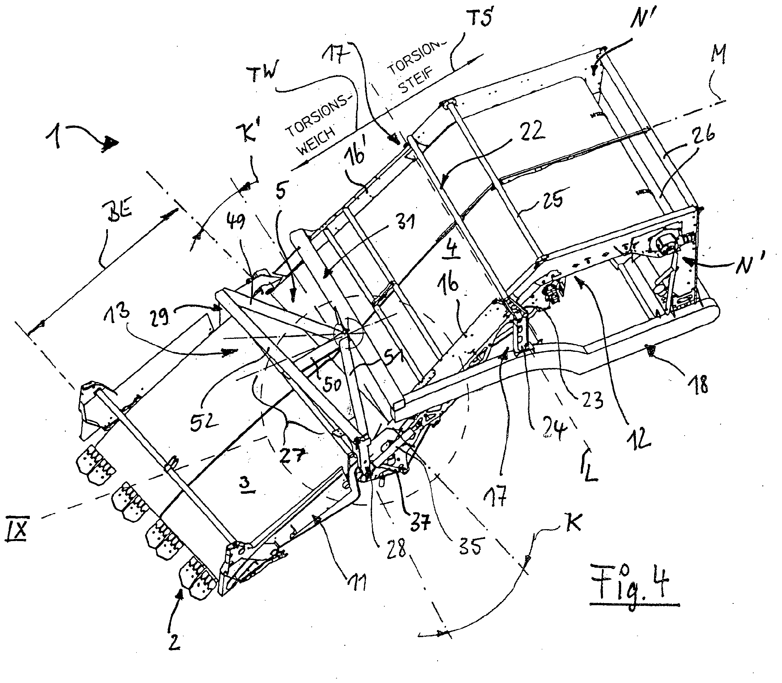

Aus dieser relativen Schwenkverlagerung S resultiert, dass im Bereich der Übergabezone 5 eine zwischen dem Rahmen 11 der vorderen Baueinheit BE und dem Hauptrahmen 18 der Maschine 1 eingeleitete Verlagerung wirksam ist und dabei eine veränderte Bandüberdeckung entsteht. Aus der Draufsicht gemäß Fig. 3 und Fig. 4 wird deutlich, dass die Bandüberdeckung als eine spitzwinklige Kontur K, K' wirksam ist.

Es versteht sich, dass bei anderen Ausführungen des Systems die vordere Baueinheit BE auch durch eine quer zur Maschinenlängsmittelebene M erfolgende Schub-verlagerung (ähnlich: Pfeil Q, Fig. 2) einen parallelen seitlichen Abstand zumindest zum zweiten Siebbandförderer 4 bilden kann. Ebenso ist denkbar, dass die vordere Baueinheit BE durch eine nicht näher dargestellte Schwenk-Schub-Verlagerung in eine Abstandslage bewegt wird.

In jedem Falle ist vorgesehen, dass mittels zumindest einer Stellvorrichtung 13 die die seitliche Verlagerung in Form des Abstandes 6 oder des Winkels W bewirkende Relativbewegung gemäß Schubpfeil Q oder Schwenkpfeil S zwischen der vorderen Baueinheit BE und dem zweiten Siebbandförderer 4 einleitbar ist.

Aus den Prinzipdarstellungen gemäß Fig. 1 bis Fig. 3 wird deutlich, dass die im Bereich der Übergabezone 5 wirksame Stellvorrichtung 13 insbesondere zur Anpassung der Maschinenstruktur an eine sogenannte "Hundegang-Fahrstellung" vorgesehen ist. Diese an sich bekannte Stellbewegung ist darauf abgestellt, dass gemäß Pfeil S eine Relativbewegung im Bereich des Maschinenrahmens 18 bzw. des zugeordneten Fahrgestells 14 mit den Radpaarungen 15, 15' erfolgen kann. Dabei wird die in Draufsicht gemäß Fig. 3 ersichtliche Fahrposition eingestellt, so dass an den die Abstandsmaße 8, 8' bildenden Längsseiten der Maschine 1 trotz deren "Überbreite" (Fig. 2) variable Wirkbereiche definiert werden können.

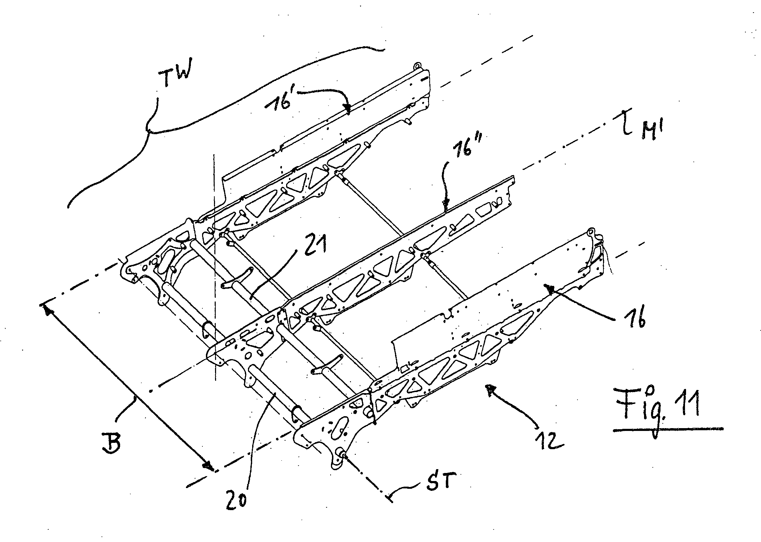

Aus den Prinzipdarstellungen gemäß Fig. 4 bis Fig. 6 wird die Rahmenkonstruktion der Maschine 1 in jeweiligen Übersichtsdarstellungen deutlich. Der Siebbandförderer 4 ist in seinem zur Übergabezone 5 gerichteten Aufnahmebereich mit einem zumindest zwei seitliche Rahmenstreben 16, 16' aufweisenden Hauptrahmen 12 versehen. Aus der Darstellung in Fig. 11 wird ersichtlich, dass der Hauptrahmen 12 noch eine zentrale Rahmenstrebe 16" aufweisen kann.

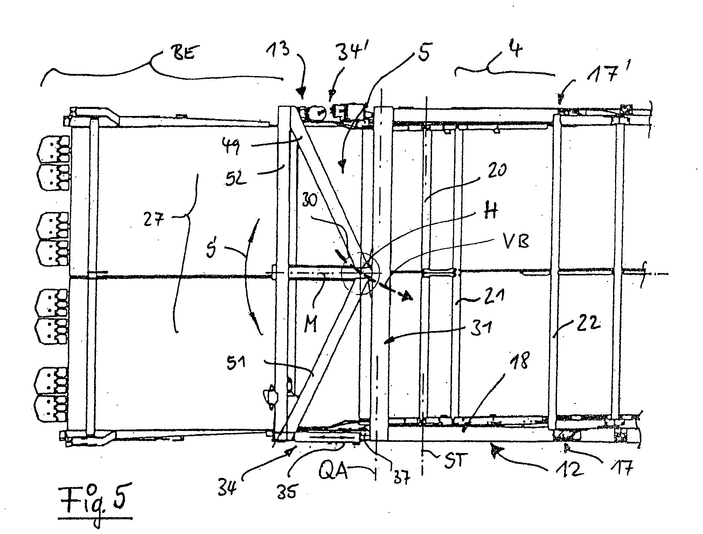

Der in Draufsicht spiegelbildlich zur Maschinenlängsmittelebene M aufgebaute Hauptrahmen 12 (Fig. 4, Fig. 5) ist seinerseits - zumindest bei N, N' - an einem Maschinenrahmen 18 festgelegt. Dabei wird in erfindungsgemäßer Ausführung zumindest in einem allgemein mit einem Pfeil TW erfassten Bereich des Hauptrahmens 12 eine torsionsweiche Abstützung für einen vorderen Teilbereich des Siebbandförderers 4 gebildet (Fig. 4).

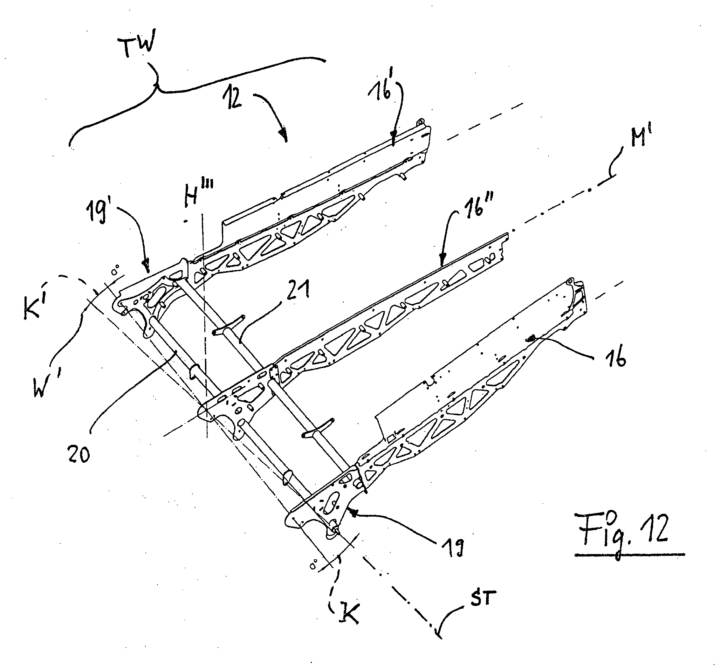

Aus den Detaildarstellungen des Hauptrahmens 12 in Fig. 11 und Fig. 12 wird in Gesamtschau mit Fig. 4 deutlich, dass der Hauptrahmen 12 an seinem zur Übergabezone 5 gerichteten Ende mit Rahmenansätzen 19, 19' versehen sein kann. Im Bereich dieser Rahmenansätze 19, 19' sind jeweilige, sich über die Breite B (Fig. 11) erstreckende Querverbinder 20, 21 vorgesehen. Damit wird eine weitgehend geschlossene Rahmenkonstruktion des Hauptrahmens 12 erreicht. Dieser kann im Bereich jeweiliger Enden 17, 17', 17" durch eine Stützbrücke 22 (Fig. 4) mit dem Maschinenrahmen 18 verbunden sein.

Im Bereich dieser Stützbrücke 22 sind an den gegenüberliegenden Enden jeweilige Tragschenkel 23 und 24 (23', 24'; nicht sichtbar) vorgesehen, so dass damit der Hauptrahmen 12 insgesamt zum Maschinenrahmen 18 hin - beidseits einer denkbaren Querlinie L - in eine torsionsweiche Abstützung des Teilabschnitts TW und einen torsionssteifen Bereich TS geteilt werden kann (Fig. 4). Der torsionssteife hintere Teilbereich TS weist zu den hinteren Stützen N, N' hin ebenfalls stabilisierende Querverbinder 25, 26 auf. Zur Stabilisierung des Siebbandes 4 kann dieses zentral im Bereich der Mittelebene M' mit der dritten Rahmenstrebe 16" versehen sein (Fig. 12), die sich zumindest im vorderen Bereich erstreckt.

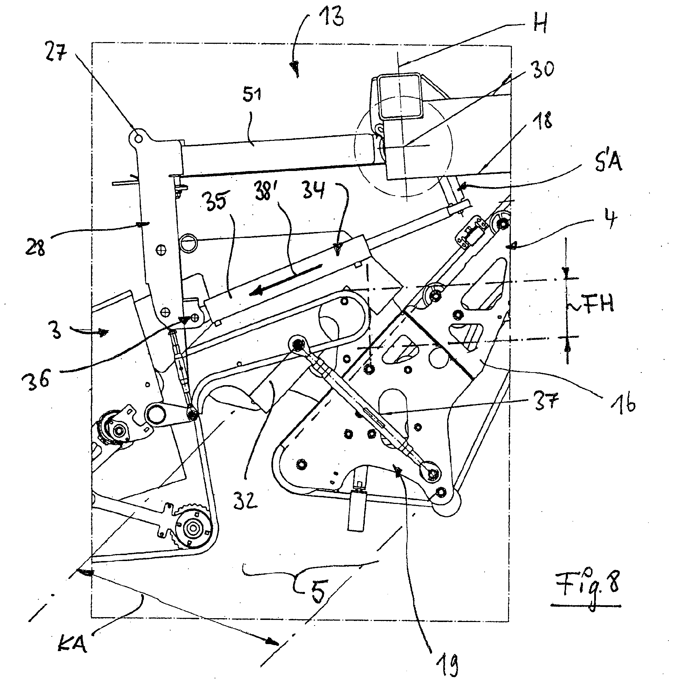

Das vorbeschriebene Konstrukt des "flexiblen", mit dem Maschinenrahmen 18 zusammenwirkenden Hauptrahmens 12 wird insbesondere für die Einstellung des seitlichen Abstandes in Form einer steuerbaren Verwindung - gemäß Winkel K, K' (Fig. 12) - der das Siebförderband 4 aufnehmenden Gestellstreben genutzt. Eine dabei mittels der zumindest einen seitlich angetriebenen Stellvorrichtung 13 erzeugte Relativbewegung S führt zu der "tordierten" Schräglage K, K' im System (Fig. 12). Bei dieser "Torsions-Verlagerung" wirken die am Maschinenrahmen 18 gehaltenen Baugruppen als komplexe Stelleinheit so zusammen, dass optimale Fahreigenschaften der Maschine 1 in jeder Rodeposition gewährleistet sind. Im Bereich der Baueinheit BE ist ein um eine im Wesentlichen vertikale Hochachse H (Fig. 8) schwenkbarer Tragrahmen 27 (Fig. 5, Fig. 6) so angeordnet, dass zumindest der erste Längsförderer 3 der vorgeordneten Baueinheit BE erfasst wird und im vorderen Bereich der Rahmenkonstruktion der Maschine 1 schwenkbar verlagert werden kann.

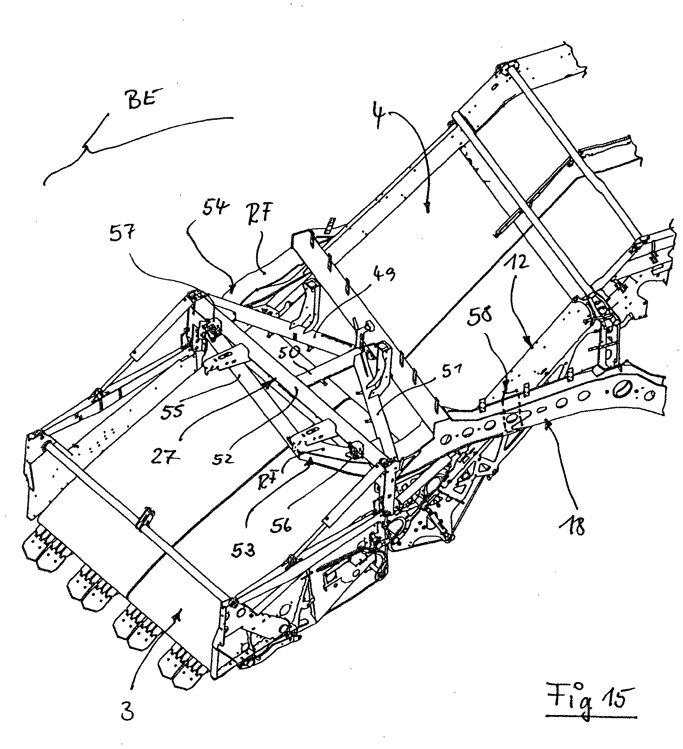

Eine Ausschnittsdarstellung gemäß Fig. 15 zeigt die optimierte Ausbildung des Maschinenrahmens 18 mit vorderen, durch einen Querträger 55 verbundenen Stützbögen 53, 54 (Fig. 2). Diese bilden damit einen vorderen Holm, auf dem sich der Tragrahmen 27 im Bereich seiner Holme 49, 50, 51, 52 abstützen kann.

Damit kann der zwischen zwei vorderen Seitenschenkeln 28, 29 des Tragrahmens 27 aufgenommene Längsförderer 3 durch die jeweiligen seitlichen Schwenkverlagerungen S stufenlos in die jeweils gewählte geneigte Gebrauchslage (Fig. 4) bewegt werden. Aus den Darstellungen gemäß Fig. 8 bis Fig. 10 wird deutlich, dass in vorteilhafter Ausführung ein die Hochachse H bildendes Gelenklager 30 mit dem Maschinenrahmen 18 im Bereich eines Querbalkens 31 verbunden ist. Der Tragrahmen 27 ist in vorteilhafter Ausführung mit jeweiligen Holmen 49, 50, 51 versehen, die zu einem vorderen Querholm 52 hin eine stabile Dreieckskontur bilden.

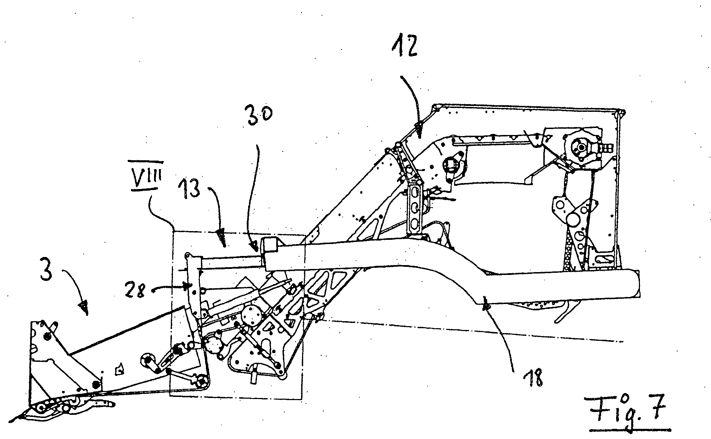

Die konstruktive Ausgestaltung der Tragbauteile im Bereich der Stellvorrichtung 13 (Fig. 7 bis Fig. 10) sieht vor, dass diese ausgehend von der Lage des Gelenklagers 30 (Fig. 7) jeweils zu den beiden äußeren Seitenschenkeln 28, 29 des vorderen Tragrahmens 27 gerichtete Tragholme 49, 51 aufweist. Damit ist für die Baueinheit BE eine Abstützung nach Art eines mit einem Stellorgan 34 der Stellvorrichtung 13 zusammenwirkenden Pendelrahmens gebildet. Dabei ist die Konstruktion des Gelenklagers 30 auf die vorbeschriebenen Funktionen des Systems so abgestimmt, dass der "pendelnde" Tragrahmen 27 am Maschinenrahmen 18 im Bereich des Querbalkens 31 über eine Kugel-Aufnahme ortsfest gelagert werden kann.

Die weitere Ausgestaltung der im Wesentlichen spiegelbildlich zur Längsmittelebene M ausgebildeten Stellvorrichtung 13 - mit dem zumindest einen Stellorgan 34 als Antrieb - wird aus den Darstellungen gemäß Fig. 7 bis Fig. 10 deutlich. Im Bereich zwischen den Seitenschenkeln 28, 29 des Tragrahmens 27 sowie dem den Hauptrahmen 12 des nachgeordneten Siebbandförderers 4 erfassenden Maschinenrahmen 18 kann dabei das zumindest eine Stellorgan 34 gehalten sein. Vorteilhaft ist nur dieses eine Stellorgan 34 in Form eines Hydraulikzylinders 35 an der in Fahrtrichtung F linken Seite der Förderstrecke vorgesehen (Fig. 5 und Fig. 6; Freiraum 34', rechte Seite).

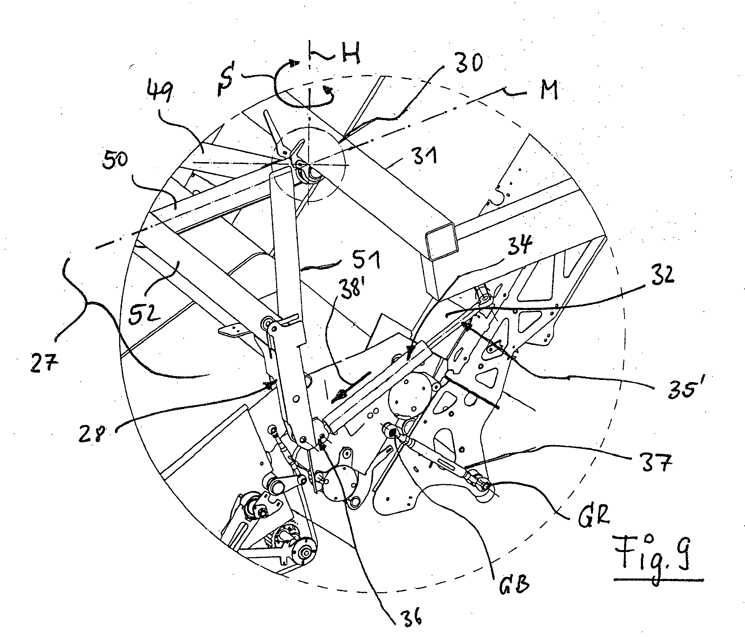

Aus den Prinzipdarstellungen in Fig. 5 und Fig. 6 wird die komplexe Wirkung der Stellvorrichtung 13 über deren Abstützung im Bereich jeweiliger seitlicher Koppelstangen 37 (Fig. 9), 37' (nicht sichtbar) deutlich. Diese bilden damit jeweilige konstruktiv variabel anpassbare Verbindungen zwischen dem Hauptrahmen 12 und den Bauteilen am hinteren seitlichen Ende des Längsförderers 3. Die Koppelstangen 37, 37' greifen dabei im Bereich eines jeweiligen Gelenkpunktes GB und GR (Fig. 9) sowie GB' und GR' (andererseits; nicht dargestellt) an den seitlichen Baugruppen so an, dass mit vorgesehener Synchronität an beiden Längsseiten der Maschine 1 die Schwenkverlagerung S (Fig. 6) umgesetzt werden kann.

Damit wird zwischen vorderem Längsförderer 3 und nachfolgendem Siebbandförderer 4 (bzw. dessen Rahmenansätzen 19, 19' mit Querverbinder 20; Fig. 11, Fig. 12) eine "parallelogrammartige" Lenkstruktur nach Art eines Stell-Parallelogramms aufgebaut. Bei Einleitung einer Stellbewegung im Bereich des Hydraulikzylinders 35 kann die unterhalb des Querbalkens 31 "hängende" Struktur des Förderers 4 - ausgehend von den parallelen Stützachsen QA und ST (Fig. 6) - verlagert werden (Pfeil S). Dabei ist auch denkbar, dass - ausgehend von der zentralen Hochachse H im Bereich des "oben liegenden" Gelenklagers 30 - die "unten liegenden" Bauteile der Baueinheit BE sowie des Förderers 4 entlang einer durch das "Parallelogramm" der Koppelstangen 37, 37' definierbaren Verbindungsbahn VB (Prinzipdarstellung in Fig. 5, vergrößert eingezeichnet) in die aus Fig. 6 entnehmbare Stellung H' gelangen können.

Mit einer in Fig. 6 als denkbare Linie gezeigte Bewegungsbahn VB' ist eine synchrone Verlagerung der beiden Querstreben 20, 21 in Relation zum vorderen Querbalken 31 des Hauptrahmens 12 prinzipiell dargestellt. Dabei wird deutlich, dass die mit der Stellvorrichtung 13 erzeugte Bewegung S um einen "fiktiven" Drehbereich DP am Hauptrahmen 12 erfolgen kann, dabei die Kurvenbahnen VB und VB' als resultierende Stellwege auftreten können und dadurch die gesamte Bauteilkombination im Bereich der Stellvorrichtung 13 optimal geführt wird. Ebenso ist denkbar, dass über die "elastisch" zusammenwirkenden Komponenten des Systems nur vergleichsweise geringe Verlagerungen - in Richtung VB, VB' - zu kompensieren sind und diese dann durch die eine entsprechende Steife aufweisenden Einzelteile des Gelenklagers 30 aufgenommen werden.

Das erfindungsgemäße Stell- und Steuerkonzept im Bereich der Baueinheit BE nutzt insgesamt die kombinierte Wirkung des Zusammenspiels von Stellorgan 34 und Koppelstangen 37, 37' mit geringem Aufwand. Dieser wird dadurch erreicht, dass eine Verstellung des Hydraulikzylinders 35 (Pfeil 38, 38') als lineare Bewegung auf die Koppelstangen 37, 37' übertragbar ist und von diesen aus die Verwindung VB' bzw. die Kontur-Verstellung K, K' über wenige Bauteilverbindungen bewirkt wird. Der dabei auftretende Kraftfluss wird über den verwindungssteifen Tragrahmen 27 in das ortsfest gehaltene Gelenklager 30 am Maschinenrahmen 18 geführt, so dass mit geringen Bauteilbelastungen eine effektive Bewegungseinleitung möglich ist.

Die Anwendung des als eine Ausführung eines Antriebsorgans vorgesehenen Hydraulikzylinders 35 kann vorteilhaft dadurch verbessert sein, dass dieser im Nahbereich einer der Rahmenstreben 16 des Siebbandförderers 4 gelagert wird. Dabei ist die Stange 35' des Zylinders 35 vorteilhaft über einen Stützansatz SA mit dem Maschinenrahmen 18 verbunden (Fig. 8), und andererseits wirkt der Hydraulikzylinder 35 mit einer den Seitenschenkel 28 im Bereich des Pendelrahmens erfassenden Stützbaugruppe 36 zusammen.

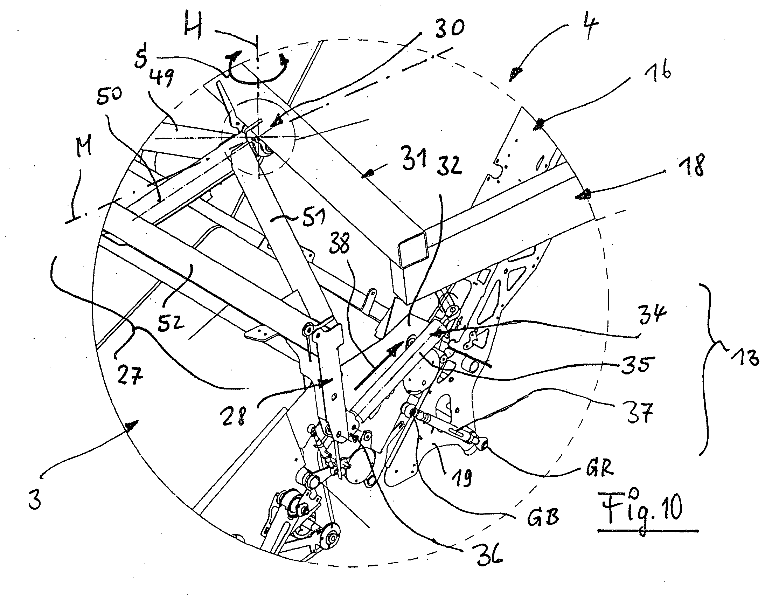

Zur Stabilisierung der Bauteilkombination im Bereich dieser Übergabezone 5 ist an den randseitigen Komponenten der Stellbaugruppe 13 insbesondere die vorbeschriebene "Parallelogramm-Führung" mit den zwei Koppelstangen 37, 37' vorgesehen. Damit wird auf beiden Seiten des Systems eine zusätzliche Führung und Stabilisierung zwischen den sich überdeckenden Enden von Band 3 und 4 erreicht. Mittels dieser Koppelstangen 37, 37' - wobei auch ähnliche Stellelemente in Form einer Stellspindel o. dgl. Nachführbauteile denkbar sind - kann insbesondere ein Abstand KA (Fig. 8) so variiert werden, dass die Fallhöhe FH und die Siebbandüberdeckung K, K' optimal eingestellt sind. Durch die beidseitige Anordnung der Koppelstangen 37, 37' wird ein konstanter Abstand zwischen den Bändern 3 und 4 gewährleistet, so dass in variierenden Gebrauchslagen der Baueinheit BE optimale Förderbedingungen gewährleistet sind (Fig. 9, Fig. 10).

In diesem Verbindungsbereich sind zusätzliche Kanalseitenwände 32 (Fig. 9) und 33 (Fig. 6) vorgesehen, die durch entsprechende Verstellung - während des Arbeitens mit einer geneigten Einstellung des Winkels W - die Verlagerung des Erntegutstromes auf die Transportstrecke sichern können.

Anhand der Perspektivdarstellungen gemäß Fig. 9 und Fig. 10 wird die Steuer-Wirkung des Hydraulikzylinders 35 deutlich. Ausgehend von der "Normallage" des Systems gemäß Fig. 9 ergibt sich die Schwenkverlagerung S im Bereich der Hochachse H dadurch, dass bei Betätigung des - in Fig. 9 in "Normallage" befindlichen - Hydraulikzylinders 35 eine Verlagerung entlang der Stange 35' in Pfeilrichtung 38 erfolgt und damit deren innen liegende Endstellung erreicht ist. Mit dieser Schubbewegung 38 wird eine einseitige Belastung und Verlagerung der vorbeschriebenen Bauteile und Komponenten im randseitigen Bereich der Übergabezone 5 eingeleitet. Diese Stellbewegung 38, 38' kann so gesteuert werden, dass unter Nutzung der elastischen Eigenschaften der Baugruppen (Fig. 11, Fig. 12) die beabsichtigte relative Verlagerung zwischen Baueinheit BE und Maschinenrahmen 18 erfolgt und die aus den Darstellungen ersichtliche "Verwindung" der Förderbandenden 3, 4 zueinander eintritt.

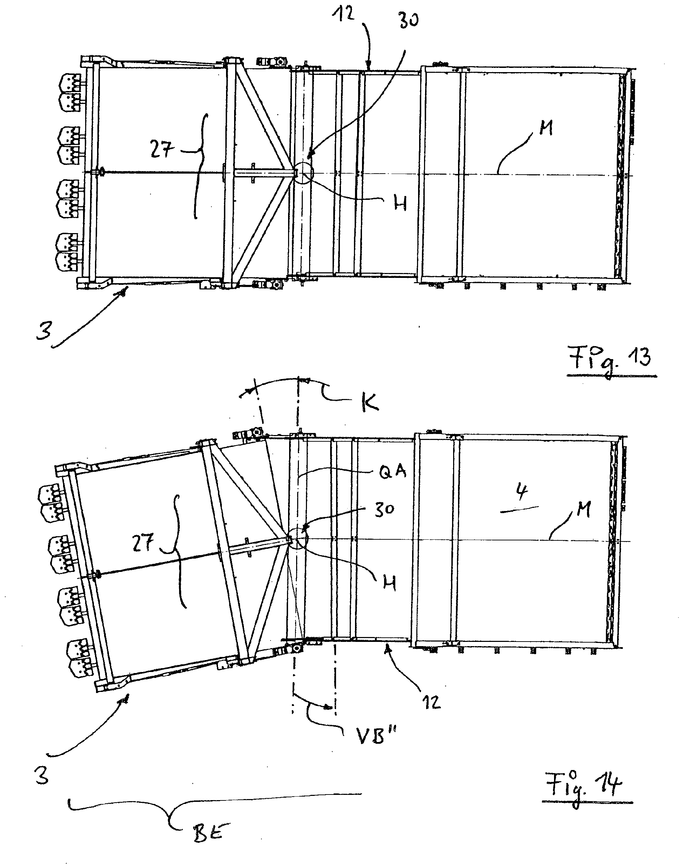

In Fig. 13 und Fig. 14 ist die "einfache" Schwenkverlagerung des Systems - ohne Verschiebung VB' gemäß Fig. 5 und Fig. 6 - in einer vereinfachten Draufsicht dargestellt. Dabei ist im Bereich des Gelenklagers 30 eine die Querachse QA bildende Kugel mit Querbohrung (nicht näher dargestellt) in das Haltesystem integriert.

Durch eine entsprechende Rückstellbewegung (Pfeil 38') kann das System aus der in Fig. 10 ersichtlichen Schwenkstellung wieder in die Ausgangslage gemäß Fig. 9 zurückbewegt werden. Ebenso ist denkbar, dass sich nach einer - durch Abschalten einer Hydropumpe (nicht dargestellt) erfolgten - "Stromlosstellung" des Hydraulikzylinders 35 das System entspannt und damit eine "automatische" Rückbewegung der "verdrehten" Baugruppen in die Ausgangslage aktiviert werden kann.

Aus der Zusammenschau von Fig. 1 mit den Übersichtsdarstellungen gemäß Fig. 11 bis Fig. 15 werden konstruktive Ausführungen des in seiner Rodeleistung verbesserten Rodesystems mit einem in dieses neue Konzept integrierten Führerhaus 39 deutlich. Als optimale Einbaulage dieses Führerhauses 39 ergibt sich ein Bereich oberhalb der erfindungsgemäß gestalteten Übergabezone 5, wobei hier variable Abstützungen im Bereich des Maschinenrahmens 18 oder zusätzlicher Baugruppen denkbar sind.

In jedem Falle ist vorgesehen, dass das Führerhaus 39 unabhängig von den Baugruppen des Maschinenrahmens 18 verlagerbar ist (Pfeil 40, Fig. 2). Eine vorteilhafte Ausführung sieht vor, dass das Führerhaus 39 im Bereich des den ersten Längsförderer 3 abstützenden Tragrahmens 27 gehalten ist. Daraus resultiert, dass das Führerhaus 39 auch gemeinsam mit dem Tragrahmen 27 bewegt werden kann.

Eine weitere Optimierung des Schwenk-Systems - gemäß Stellbewegung S bzw. Stellwinkel W - sieht vor, dass in das Bauteilkonzept jeweilige definierte Auflagepunkte integriert werden, in deren Bereich Dämpfungs- und/oder Reibungsminderungselemente vorgesehen werden. In Fig. 15 ist mit jeweiligen Auflageteilen 56, 57 eine denkbare Abstützung auf einer oberen Reibfläche RF im Bereich der Stützbögen 53, 54 des Maschinenrahmens 18 gezeigt. Denkbar sind auch seitliche Anlagepuffer 58 im Bereich zwischen Maschinenrahmen 18 und Hauptrahmen 12 (Fig. 15, rechte Seite).

## Patentansprüche

1. Maschine zum Ernten von Hackfrüchten, insbesondere in Form einer Kartoffelvollerntemaschine, mit einer in Gebrauchslage auf einem Erntefeld (E) quer zur Fahrtrichtung (F) entsprechend einer Rodebreite (B) mehrere Reihen (R) des Erntegutes mit Beimengungen vom Ackerboden (A) aufnehmenden Rodeeinrichtung (2), von der aus das aufgelockerte Gemisch (G) aus Erntegut und Beimengungen mittels eines ersten, als Siebbandförderer ausgeführten Längsförderers (3) entgegen der Fahrtrichtung (F) verlagerbar ist und auf einen zweiten Siebbandförderer (4) übergeleitet wird, wobei in Längsrichtung (M) zwischen Längsförderer (3) und Siebbandförderer (4) eine eine Bandüberdeckung aufweisende Übergabezone (5) definiert ist, wobei der in Förderrichtung (FG) erste Längsförderer (3) mit der vorgeordneten Rodeeinrichtung (2) eine in Querrichtung (Q) der Maschine (1) relativ zum zweiten Siebbandförderer (4) verlagerbare Baueinheit (BE) bildet und diese ausgehend von der gemeinsamen Übergabezone (5) zumindest bereichsweise in einen seitlichen Abstand (6; W, W') zum zweiten Siebbandförderer (4) verlagerbar ist, wobei die vordere Baueinheit (BE) durch eine relative Schwenkverlagerung (S) zum nachgeordneten Siebbandförderer (4) eine spitzwinklig (Winkel W) zur Maschinenlängsmittelebene (M) geneigte Gebrauchslage innerhalb des Systems aus Rodeeinrichtung (2) und den beiden Förderern (3, 4) definiert und im Bereich der Übergabezone (5) eine zwischen dem Rahmen (11) der vorderen Baueinheit (BE) und dem Hauptrahmen (12) der Maschine (1) eingeleitete Verstellung wirksam ist, derart, dass eine Bandüberdeckung mit in Draufsicht spitzwinklig verlaufender Kontur (K, K') entsteht.

2. Maschine nach Anspruch 1, **dadurch gekennzeichnet, dass** diese im Bereich jeweiliger an die Übergabezone (5) anschließender und zur Fahr- und Erntegutbewegung vorgesehener Aggregate (7, 7') mit jeweiligen Baugruppen ausführbar ist, die ausgehend von der Maschinenbreite bzw. der vorderen Rodebreite (B) einen zumindest einseitigen seitlichen Überstand (8, 8') definieren.

3. Maschine nach Anspruch 1 oder 2, **dadurch gekennzeichnet, dass** die vorgelagerte Baueinheit (BE) zumindest im Bereich ihrer Rodeeinrichtung (2) in jeweiligen variabel einstellbaren Aufnahmebereichen am Ackerboden (A) positionierbar ist.

4. Maschine nach einem der Ansprüche 1 bis 3, **dadurch gekennzeichnet, dass** die vordere Baueinheit (BE) und der nachgeordnete Siebbandförderer (4) ausgehend von der Rodebreite (B) eine Reinigungsstrecke mit im Wesentlichen unveränderter Transportbreite (T) bilden.

5. Maschine nach einem der Ansprüche 1 bis 4, **dadurch gekennzeichnet, dass** der als seitlicher Versatz wirkende Abstand (6; W, W') von vorderer Baueinheit (BE) und zweitem Siebbandförderer (4) variabel wählbar ist, derart, dass in Gebrauchslage der Maschine (1) am Rand des Erntefeldes (E) ein bis nahe diesem verlaufender Ackerbodenstreifen erfassbar ist und über diesem Bereich hineinragende Hindernisse (9) passierbar sind.

6. Maschine nach einem der Ansprüche 1 bis 5, **dadurch gekennzeichnet, dass** mittels zumindest einer Stellvorrichtung (13) die einen seitlichen Abstand (6; W, W'; 8, 8') beeinflussende Relativbewegung (Q, S) zwischen vorderer Baueinheit (BE) und zweitem Siebbandförderer (4) einleitbar ist.

7. Maschine nach einem der Ansprüche 1 bis 6, **dadurch gekennzeichnet, dass** die Stellvorrichtung (13) zur Anpassung der Maschinenstruktur an eine jeweilige Hundegang-Fahrstellung vorgesehen ist, derart, dass an den Längsseiten der Maschine (1) variable Wirkbereiche definierbar sind.

8. Maschine nach einem der Ansprüche 1 bis 7, **dadurch gekennzeichnet, dass** die zwischen dem in Förderrichtung (FG) hinteren Ende der vorderen Baueinheit (BE) und dem Aufnahmebereich des zweiten Siebbandförderers (4) vorgesehene Übergabezone (5) eine den Förderstrom (G) des Erntegutes beeinflussende Fallhöhe (FH) aufweist.

9. Maschine nach Anspruch 8, **dadurch gekennzeichnet, dass** mittels der Stellvorrichtung (13) die Fallhöhe (FH) und/oder die Bandüberdeckung im Bereich der Übergabezone (5) veränderbar ist/sind.

10. Maschine nach einem der Ansprüche 1 bis 9, **dadurch gekennzeichnet, dass** der Siebbandförderer (4) in seinem zur Übergabezone (5) gerichteten Aufnahmebereich mit einem seitliche Rahmenstreben (16, 16') aufweisenden Hauptrahmen (12) versehen ist, mit dessen Fixierung (bei 17, 17') am Maschinenrahmen (18) eine zumindest bereichsweise torsionsweiche Abstützung für zumindest Teilbereiche des Siebbandförderers (4) gebildet ist.

11. Maschine nach Anspruch 10, **dadurch gekennzeichnet, dass** der mehrteilig ausführbare Hauptrahmen (12) zumindest an seinen zur Übergabezone (5) gerichteten Enden der Rahmenstreben (16, 16') mit Rahmenansätzen (19, 19') versehen ist.

12. Maschine nach Anspruch 10 oder 11, **dadurch gekennzeichnet, dass** der den Siebbandförderer (4) aufnehmende Hauptrahmen (12) durch eine diesem einen torsionsweichen vorderen Teilabschnitt (TW) und einen torsionssteifen hinteren Teilabschnitt (TS) vorgebende Stützbrücke (22) mit dem Maschinenrahmen (18) verbunden ist.

13. Maschine nach einem der Ansprüche 1 bis 12, **dadurch gekennzeichnet, dass** ein zumindest den ersten Längsförderer (3) der vorgeordneten Baueinheit (BE) erfassender Tragrahmen (27) über ein im Bereich der Maschinenlängsmittelebene (M) zentral angeordnetes Gelenklager (30) um eine im Wesentlichen vertikale Hochachse (H) schwenkbar abgestützt ist, derart, dass der zwischen zwei Seitenschenkeln (28, 29) des Tragrahmens (27) aufgenommene Längsförderer (3) durch jeweilige seitliche Schwenkverlagerungen (S) in den zur Maschinenlängsmittelebene (M) geneigten Gebrauchslagen (W, W') positionierbar ist.

14. Maschine nach Anspruch 13, **dadurch gekennzeichnet, dass** das Gelenklager (30) mit dem Maschinenrahmen (18) im Bereich eines Querbalkens (31) verbunden ist.

15. Maschine nach Anspruch 13 oder 14, **dadurch gekennzeichnet, dass** die Stellvorrichtung (13) ausgehend vom Gelenklager (30) jeweilige, zu den beiden äußeren Seitenschenkeln (28, 29) des vorderen Tragrahmens (27) gerichtete Tragholme (49, 50) aufweist und dabei mittels zumindest eines Querholms (52) eine Abstützung nach Art eines mit einem Stellorgan (34) der Stellvorrichtung (13) zusammenwirkenden Pendelrahmens gebildet ist.

16. Maschine nach Anspruch 15, **dadurch gekennzeichnet, dass** in zumindest einem Bereich zwischen den Seitenschenkeln (28, 29) des Tragrahmens (27) sowie dem Hauptrahmen (18) der Maschine (1) des nachgeordneten Siebbandförderers (4) das zumindest eine Stellorgan (34) vorgesehen ist.

17. Maschine nach Anspruch 15 oder 16, **dadurch gekennzeichnet, dass** das Stellorgan (34) in Form eines Hydraulikzylinders (35) ausgebildet ist.

18. Maschine nach einem der Ansprüche 15 bis 17, **dadurch gekennzeichnet, dass** der Hydraulikzylinder (35) einerseits im Bereich des Siebbandförderers (4) am Maschinenrahmen (18) gelagert ist und andererseits mit einer den Seitenschenkel (28) des Pendelrahmens (27) erfassenden Stützbaugruppe (36) verbunden ist.

19. Maschine nach einem der Ansprüche 1 bis 18, **dadurch gekennzeichnet, dass** im Bereich der Übergabezone (5) bzw. der Stellvorrichtung (13) jeweils eine seitliche Koppelstange (37, 37') vorgesehen ist, derart, dass eine konstruktiv anpassbare Verbindung zwischen Hauptrahmen (12) und dem hinteren seitlichen Ende des Längsförderers (3) gebildet ist.

20. Maschine nach Anspruch 19, **dadurch gekennzeichnet, dass** die Koppelstangen (37, 37') eine jeweilige Gelenkpunkte (GB, GR; GB', GR') aufweisende parallelogrammartige Lenkstruktur bilden.

21. Maschine nach Anspruch 19 oder 20, **dadurch gekennzeichnet, dass** das Lenk-Parallelogramm die mittels des zumindest einen Hydraulikzylinders (35) einleitbare Relativbewegung zwischen Längsförderer (3) und Siebbandförderer (4) im Bereich der Übergabezone (5) steuert.

22. Maschine nach einem der Ansprüche 19 bis 21, **dadurch gekennzeichnet, dass** die das Stell-Parallelogramm definierenden Koppelstangen (37, 37') im Bereich des Hauptrahmens (12) mit zumindest einer Querstrebe (20, 21) zusammenwirken.

23. Maschine nach einem der Ansprüche 1 bis 22, **dadurch gekennzeichnet, dass** der Maschinenrahmen (18) im Nahbereich zum Hauptrahmen (12) und/oder den schwenkbaren Komponenten der vorderen Baueinheit mit jeweiligen, als Dämpfungs- und/oder Reibungsminderungselemente wirksamen An- und Auflageteilen (56, 57) versehen ist.

24. Maschine nach einem der Ansprüche 1 bis 23, **dadurch gekennzeichnet, dass** diese (1) mit einem sich im Wesentlichen oberhalb der Übergabezone (5) erstreckenden und im Bereich des Maschinenrahmens (18) abstützbaren Führerhaus (39) versehen ist.

25. Maschine nach Anspruch 24, **dadurch gekennzeichnet, dass** das Führerhaus (39) unabhängig von den Baugruppen des Maschinenrahmens (18) verlagerbar ist.

26. Maschine nach Anspruch 24 oder 25, **dadurch gekennzeichnet, dass** das Führerhaus (39) im Bereich des den ersten Längsförderer (3) abstützenden Tragrahmens (27) gehalten ist.

27. Maschine nach einem der Ansprüche 24 bis 26, **dadurch gekennzeichnet, dass** das Führerhaus (39) gemeinsam mit dem Tragrahmen (27) verlagerbar ist.

## Claims

1. Machine for harvesting root crops, in particular in the form of a potato harvesting machine, comprising a digging apparatus (2) that, when in the use position on a harvest field (E), receives a plurality of rows (R) of the harvest crop together with additions of arable soil (A), which rows are transverse to the direction of travel (F) and correspond to a digging width (B), by means of which digging apparatus the loosened mixture (G) of harvest crop and additions can be moved against the direction of travel (F) by means of a first longitudinal conveyor (3) designed as a screening belt conveyor, and is transported to a second screening belt conveyor (4), wherein a transfer zone (5) comprising a belt cover is defined in the longitudinal direction (M) between the longitudinal conveyor (3) and the screening belt conveyor (4), wherein the first longitudinal conveyor (3) in the conveying direction (FG) forms, together with the digging apparatus (2) arranged upstream, a structural unit (BE) that can be moved in the transverse direction (Q) of the machine (1) relative to the second screening belt conveyor (4) and can be moved from the common transfer zone (5), at least in regions, to a lateral distance (6; W, W') from the second screening belt conveyor (4), wherein the front structural unit (BE) defines, by means of a relative pivoting movement (S) with respect to the screening belt conveyor (4) arranged downstream, a use position within the system composed of the digging apparatus (2) and the two conveyors (3, 4), which position is inclined at an acute angle (angle W) to the machine longitudinal central plane (M), and, in the region of the transfer zone (5), an adjustment introduced between the frame (11) of the front structural unit (BE) and the main frame (12) of the machine (1) is effective such that a belt cover having a contour (K, K') that extends at an acute angle in plan view is created.

2. Machine according to claim 1, **characterized in that** said contour can be implemented in the region of respective aggregates (7, 7') which comprise respective assemblies, are adjacent to the transfer zone (5) and are provided for travelling movement and harvest crop movement, which assemblies define a lateral projecting length (8, 8') on at least one side based on the machine width or the front digging width (B).

3. Machine according to either claim 1 or claim 2, **characterized in that** the structural unit (BE) mounted upstream can be positioned, at least in the region of the digging apparatus (2) thereof, in various variably adjustable receiving regions on the arable soil (A).

4. Machine according to any of claims 1 to 3, **characterized in that** the front structural unit (BE) and the screening belt conveyor (4) arranged downstream form, based on the digging width (B), a cleaning track having a substantially unchanged transport width (T).

5. Machine according to any of claims 1 to 4, **characterized in that** the distance (6; W, W') acting as a lateral offset from the front structural unit (BE) and the second screening belt conveyor (4) can be variably selected such that, when the machine (1) is in the use position at the edge of the harvest field (E), an arable soil strip that extends close to said edge can be detected and obstacles (9) that project into this region can be passed.

6. Machine according to any of claims 1 to 5, **characterized in that** the relative movement (Q, S) that influences a lateral distance (6; W, W'; 8, 8') can be introduced between the front structural unit (BE) and the second screening belt conveyor (4) by means of at least one positioning device (13).

7. Machine according to any of claims 1 to 6, **characterized in that** the positioning device (13) is provided for adapting the machine structure to a corresponding crab-steering driving position such that variable operating ranges can be defined on the longitudinal sides of the machine (1).

8. Machine according to any of claims 1 to 7, **characterized in that** the transfer zone (5) provided between the rear end of the front structural unit (BE) in the conveying direction (FG) and the receiving region of the second screening belt conveyor (4) has a drop height (FH) that influences the conveying rate (G) of the harvest crop.

9. Machine according to claim 8, **characterized in that** the drop height (FH) and/or the belt cover can be changed in the region of the transfer zone (5) by means of the positioning device (13).

10. Machine according to any of claims 1 to 9, **characterized in that** the screening belt conveyor (4) is provided, in the receiving region thereof that is directed towards the transfer zone (5), with a main frame (12) comprising lateral frame struts (16, 16'), the fixing (at 17, 17') of which main frame to the machine frame (18) forming a support for at least portions of the screening belt conveyor (4), which support is torsionally flexible at least in regions.

11. Machine according to claim 10, **characterized in that** the main frame (12) that can be designed to have multiple parts is provided with frame extensions (19, 19') at least on the ends of the frame struts (16, 16') thereof which are directed towards the transfer zone (5).

12. Machine according to either claim 10 or claim 11, **characterized in that** the main frame (12) receiving the screening belt conveyor (4) is connected to the machine frame (18) by means of a supporting bridge (22) which defines a torsionally flexible front portion (TW) and a torsionally rigid rear portion (TS) for said frame.

13. Machine according to any of claims 1 to 12, **characterized in that** a support frame (27) that includes at least the first longitudinal conveyor (3) of the structural unit (BE) arranged upstream is pivotally supported about a substantially vertical axis (H) by a hinge bearing (30) arranged centrally in the region of the machine longitudinal central plane (M) such that the longitudinal conveyor (3) received between two lateral limbs (28, 29) of the support frame (27) can be positioned in the use positions (W, W') inclined towards the machine longitudinal central plane (M) by means of respective lateral pivoting movements (S).

14. Machine according to claim 13, **characterized in that** the hinge bearing (30) is connected to the machine frame (18) in the region of a transverse beam (31).

15. Machine according to either claim 13 or claim 14, **characterized in that** the positioning device (13) comprises respective support spars (49, 50) directed from the hinge bearing (30) towards the two outer lateral limbs (28, 29) of the front support frame (27) and in so doing a support in the form of a pendulum frame cooperating with a positioning member (34) of the positioning device (13) is formed by means of at least one transverse spar (52).

16. Machine according to claim 15, **characterized in that** the at least one positioning member (34) is provided in at least one region between the lateral limbs (28, 29) of the support frame (27) and the main frame (18) of the machine (1) of the screening belt conveyor (4) arranged downstream.

17. Machine according to either claim 15 or claim 16, **characterized in that** the positioning member (34) is in the form of a hydraulic cylinder (35).

18. Machine according to any of claims 15 to 17, **characterized in that** one end of the hydraulic cylinder (35) is mounted on the machine frame (18) in the region of the screening belt conveyor (4) and the other end is connected to a supporting assembly (36) that includes the lateral limbs (28) of the pendulum frame (27).

19. Machine according to any of claims 1 to 18, **characterized in that** a lateral coupling rod (37, 37') is provided in each case in the region of the transfer zone (5) and of the positioning device (13) such that a connection that is adjustable in terms of design is formed between the main frame (12) and the rear lateral end of the longitudinal conveyor (3).

20. Machine according to claim 19, **characterized in that** the coupling rods (37, 37') form a parallelogram-shaped steering structure comprising respective hinge points (GB, GR; GB', GR').

21. Machine according to either claim 19 or claim 20, **characterized in that** the steering parallelogram controls the relative movement between the longitudinal conveyor (3) and the screening belt conveyor (4) in the region of the transfer zone (5), which movement can be introduced by means of the at least one hydraulic cylinder (35).

22. Machine according to any of claims 19 to 21, **characterized in that** the coupling rods (37, 37') defining the positioning parallelogram cooperate with at least one transverse strut (20, 21) in the region of the main frame (12).

23. Machine according to any of claims 1 to 22, **characterized in that** the machine frame (18) is provided, in the region close to the main frame (12) and/or the pivotable components of the front structural unit, with respective bearing and supporting parts (56, 57) that act as damping and/or friction-reducing elements.

24. Machine according to any of claims 1 to 23, **characterized in that** said machine (1) is provided with a driver's cab (39) that extends substantially above the transfer zone (5) and can be supported in the region of the machine frame (18).

25. Machine according to claim 24, **characterized in that** the driver's cab (39) can be moved independently of the assemblies of the machine frame (18).

26. Machine according to either claim 24 or claim 25, **characterized in that** the driver's cab (39) is held in the region of the support frame (27) supporting the first longitudinal conveyor (3).

27. Machine according to any of claims 24 to 26, **characterized in that** the driver's cab (39) can be moved together with the support frame (27).

## Revendications

1. Machine à récolter des plantes sarclées, se présentant en particulier sous la forme d'une machine à récolter des pommes de terre, comprenant un dispositif d'arrachage (2) qui reçoit, dans une position d'utilisation sur un champ de culture (E) transversalement à la direction de déplacement (F) correspondant à une largeur d'arrachage (B), une pluralité de rangées (R) du produit récolté comportant des matières additionnelles provenant de la terre (A), dispositif d'arrachage depuis lequel le mélange ameubli constitué de produit récolté et de matières additionnelles est déplacé au moyen d'un transporteur longitudinal (3), se présentant sous la forme d'un premier transporteur à bande de tamisage, dans le sens opposé au sens de déplacement (F) et est transféré sur un deuxième transporteur à bande de tamisage, une zone de transfert (5) munie d'une bande de revêtement étant définie dans la direction longitudinale (M) entre le transporteur longitudinal (3) et le transporteur à bande de tamisage (4), le premier transporteur longitudinal (3), par référence à la direction de transport (FG), formant avec le premier dispositif d'arrachage (2) disposé en amont une unité structurelle (BE) mobile dans la direction transversale (Q) de la machine (1) par rapport au deuxième transporteur à bande de tamisage (4) et cette unité structurelle étant mobile depuis la zone de transfert commune (5) au moins partiellement sur une distance latérale (6 ; W, W') au deuxième transporteur à bande de tamisage (4), l'unité structurelle avant (BE) définissant, par un pivotement relatif (S) par rapport au transporteur à bande de tamisage (4) disposé en aval, une position d'utilisation inclinée d'un angle aigu (angle W) par rapport au plan médian longitudinal (M) de la machine à l'intérieur du système constitué du dispositif d'arrachage (2) et des deux transporteurs (3, 4) et un réglage, effectué entre le châssis (11) de l'unité structurelle avant (BE) et le châssis principal (12) de la machine (1), étant opérant au niveau de la zone de transfert (5) pour former une bande revêtement ayant un contour (K, K') s'étendant selon un angle aigu en vue de dessus.

2. Machine selon la revendication 1, **caractérisée en ce que** cette machine peut être réalisée, au niveau d'ensembles respectifs (7, 7') se raccordant à la zone de transfert et destinés à se déplacer et à déplacer le produit récolté, avec des modules respectifs qui définissent, depuis la largeur de la machine ou La largeur d'arrachage avant (B), une projection latérale (8, 8') au moins d'un seul côté.

3. Machine selon la revendication 1 ou 2, **caractérisée en ce que** l'unité structurelle avant (BE) peut être positionnée au moins au niveau de son dispositif d'arrachage (2) dans des zones de réception respectives réglables de façon variable sur le sol (A).

4. Machine selon l'une des revendications 1 à 3, **caractérisée en ce que** l'unité structurelle avant (BE) et le transporteur à bande de tamisage aval (4) forment à partir de la largeur d'arrachage (B) une voie de nettoyage ayant une largeur de transport (T) sensiblement inchangée.

5. Machine selon l'une des revendications 1 à 4, **caractérisée en ce que** la distance (6 ; W, W'), agissant comme un décalage latéral, à l'unité structurelle avant (BE) et au deuxième transporteur à bande de tamisage (4) peut choisie de manière variable de telle sorte que, dans la position d'utilisation de la machine (1), une bande de terre agricole est détectée au niveau du bord du champ de récolte (E) et des obstacles (9) saillant de cette zone sont praticables.

6. Machine selon l'une des revendications 1 à 5, **caractérisée en ce que** le mouvement relatif (Q, S), influençant une distance latérale (6 ; W, W' ; 8, 8'), peut être amorcé entre l'unité structurelle avant (BE) et le deuxième transporteur à bande de tamisage (4) au moyen d'au moins un dispositif de réglage (13).

7. Machine selon l'une des revendications 1 à 6, **caractérisée en ce que** le dispositif de réglage (13) est prévu pour adapter la structure de la machine à une position de marche en crabe respective de sorte que des zones actives variables peuvent être définies sur les côtés longitudinaux de la machine (1).

8. Machine selon l'une des revendications 1 à 7, **caractérisée en ce que** la zone de transfert, prévue entre l'extrémité arrière de l'unité structurelle avant (BE) dans la direction de transport (FG) et la zone de réception du deuxième transporteur à bande de tamisage (4), a une hauteur de chute (FH) influençant pour le flux de transport (G) du produit récolté.

9. Machine selon la revendication 8, **caractérisée en ce que** la hauteur de chute (FH) et/ou la bande de recouvrement au niveau de la zone de transfert (5) peuvent être modifiées au moyen du dispositif de réglage (13).

10. Machine selon l'une des revendications 1 à 9, **caractérisée en ce que** le transporteur à bande de tamisage (4) est muni, dans sa zone de réception dirigée vers la zone de transfert (5), d'un châssis principal (12) qui comporte des montants de châssis latéraux (16, 16') et dont la fixation (en 17, 174) au châssis (18) de la machine forme un support, au moins partiellement souple en torsion, destiné à des parties du transporteur à bande de tamisage (4).

11. Machine selon la revendication 10, **caractérisée en ce que** le châssis principal (12) réalisable en plusieurs parties est pourvu d'appendices de châssis (19, 19') au moins au niveau de ses extrémités, dirigées vers la zone de transfert (5), des montants de châssis (16, 16').

12. Machine selon la revendication 10 ou 11, **caractérisée en ce que** le châssis principal (12), recevant le transporteur à bande de tamisage (4), est relié au châssis de machine (18) par un pont de support (22) prédéterminant une partie avant (TW) souple en torsion et une partie arrière (TS) rigide en torsion.

13. Machine selon l'une des revendications 1 à 12, **caractérisée en ce qu'**un cadre de support (27), comprenant au moins le premier transporteur longitudinal (3) de l'unité structurelle avant (BE), est supporté par un palier de pivotement, disposé au centre au niveau du plan médian longitudinal (M) de la machine, de manière à pouvoir pivoter sur un axe sensiblement vertical (H) de telle sorte que le transporteur longitudinal (3), reçu entre les deux branches latérales (28, 29) du cadre de support (27), peut être positionné dans les positions d'utilisation (W, W'), inclinées par rapport au plan médian longitudinal (M) de la machine, par des pivotements latéraux respectifs (S).

14. Machine selon la revendication 13, **caractérisée en ce que** le palier de pivotement (30) est relié au châssis (18) de la machine au niveau d'une barre transversale (31).

15. Machine selon la revendication 13 ou 14, **caractérisée en ce que** le dispositif de réglage (13) comporte, à partir du palier de pivotement (30), des longerons de support (49, 50) respectifs dirigés vers les deux branches latérales extérieures (28, 29) du châssis de support avant (27) et un support est formé au moyen d'au moins une traverse (52) à la manière d'un cadre pendulaire coopérant avec un élément de réglage (34) du dispositif de réglage (13).

16. Machine selon la revendication 15, **caractérisée en ce que** l'au moins un élément de réglage (34) est prévu dans au moins une zone située entre les branches latérales (28, 29) du cadre de support (27) et le châssis principal (18) de la machine (1) du transporteur à bande de tamisage aval (4).

17. Machine selon la revendication 15 ou 16, **caractérisée en ce que** l'élément de réglage (34) est conçu sous la forme d'un vérin hydraulique (35).

18. Machine selon l'une des revendications 15 à 17, **caractérisée en ce que** le vérin hydraulique (35) est d'une part monté sur le châssis de machine (18) dans la zone du transporteur à band de tamisage (4) et est d'autre part relié à un ensemble de support (36) comprenant les branches latérales (28) du cadre pendulaire (27).

19. Machine selon l'une des revendications 1 à 18, **caractérisée en ce qu'**une barre d'accouplement (37, 37') est prévue au niveau de la zone de transfert (5) et au niveau du dispositif de réglage (13) de manière à former une liaison structurellement adaptable entre le châssis principal (12) et l'extrémité latérale arrière du transporteur longitudinal (3) .

20. Machine selon la revendication 19, **caractérisée en ce que** les barres d'accouplement (37, 37') forme une structure de direction de type parallélogramme comportant des points de pivotement respectifs (GB, GR ; GB' ; GR').

21. Machine selon la revendication 19 ou 20, **caractérisée en ce que** le parallélogramme de direction commande le mouvement relatif, amorcé au moyen de l'au moins un vérin hydraulique (35), entre le transporteur longitudinal (3) et le transporteur à bande de tamisage (4) au niveau de la zone de transfert (5).

22. Machine selon l'une des revendications 19 à 21, **caractérisée en ce que** les barres d'accouplement (37, 37'), définissant le parallélogramme de réglage, coopèrent au niveau du cadre principal (12) avec au moins un montant transversal (20, 21).

23. Machine selon l'une des revendications 1 à 22, **caractérisée en ce que** le châssis de machine (18) est muni au voisinage immédiat du châssis principal (12) et/ou des composants pivotants de l'unité structurelle avant d'éléments de butée et d'appui (56, 57) respectifs agissant comme des éléments d'amortissement et/ou de réduction du frottement.

24. Machine selon l'une des revendications 1 à 23, **caractérisée en ce que** celle-ci est munie d'une cabine de conducteur (39) s'étendant sensiblement au-dessus de la zone de transfert (5) et pouvant être supporté au niveau du châssis de machine (18).

25. Machine selon la revendication 24, **caractérisée en ce que** la cabine de conducteur (39) est mobile indépendamment des modules du châssis de machine (18).

26. Machine selon la revendication 24 ou 25, **caractérisée en ce que** la cabine de conducteur (39) est montée au niveau du cadre de support (27) supportant le premier transporteur longitudinal (3).

27. Machine selon l'une des revendications 24 à 26, **caractérisée en ce que** la cabine de conducteur (39) est mobile conjointement avec le cadre de support (27).
